# EUROPÄISCHE PATENTSCHRIFT

(11) **EP 1 163 467 B1**
(45) Veröffentlichungstag und Bekanntmachung des Hinweises auf die Patenterteilung: **11.06.2003**
(21) Anmeldenummer: 99917848.6
(22) Anmeldetag: 23.03.1999
(51) Int. Cl.: F16L 23/14, F16L 51/02

(54) **BALG FÜR EINEN KOMPENSATOR SOWIE ZUGEHÖRIGER KOMPENSATOR UND VERFAHREN ZUR HERSTELLUNG EINES BALGES**
BELLOWS FOR A COMPENSATOR AND COMPENSATOR PERTAINING THERETO AND METHOD FOR PRODUCING BELLOWS
SOUFFLET POUR UN COMPENSATEUR, COMPENSATEUR EQUIPE DUDIT SOUFFLET ET PROCEDE DE PRODUCTION D'UN SOUFFLET

(43) Veröffentlichungstag der Anmeldung: 19.12.2001
(73) Patentinhaber: Geldner, Siegfried, D-83059 Kolbermoor (DE)
(72) Erfinder: Geldner, Siegfried, D-83059 Kolbermoor (DE)
(74) Vertreter: Flach, Dieter Dipl.-Phys.
(86) Internationale Anmeldenummer: EP9901983
(87) Internationale Veröffentlichungsnummer: WO00057094

(56) Entgegenhaltungen:
- DE-A- 2 847 892
- DE-A- 3 123 625
- DE-C- 3 604 803
- DE-U- 9 307 616
- DE-U- 29 503 547

## Beschreibung

Die Erfindung betrifft einen Balg für einen Kompensator als elastische Verbindung zwischen zwei in Längsrichtung voneinander angeordneten Kanalanschlussstücken sowie einen entsprechenden Kompensator unter Verwendung eines derartigen Balgs nach dem Oberbegriff des Anspruchs 1 bzw. 20 sowie ein Verfahren zur Herstellung eines Balges nach Anspruch 25.

Derartige Kompensatoren mit einer nach dem Oberbegriff des Anspruchs 1 bekannten Balg-Konstruktion werden insbesondere zur Körperschallentkopplung und/oder als Dehnungsausgleich bei Belüftungskanälen in der Klimatechnik verwendet. Sie sind auch zum Ausgleich von Wärmedehnungen und Montageungenauigkeiten geeignet.

Kanäle, insbesondere Belüftungskanäle in der Klimatechnik können bekanntermaßen unterschiedliche Querschnittsformen aufweisen. Aus der EP 0 148 286 A1 ist grundsätzlich eine Flanschverbindung zum gegenseitigen Befestigen von im Querschnitt im wesentlichen rechteckigen Kanalteilstücken für Klimakanalanlagen bekannt, wobei die daraus bekannte Flanschverbindung sowohl zur Montage von festen Kanalwänden als aber auch zur Montage einer elastischen Wand unter Bildung eines Balges verwendet werden kann.

Aus der EP 0 282 608 A1 ist eine bezüglich des Flanschprofiles vergleichbare Kanalkonstruktion bekannt, die jedoch für im Querschnitt kreisförmige Kanalstücke geeignet ist. Auch hier kann die daraus bekannte Flanschverbindung mit festen, in der Regel aus Blech bestehenden, Kanalwänden oder unter Einsatz eines elastischen Wandmateriales unter Bildung eines Balges verwendet werden.

Aus der DE 41 40 870 A1 ist ein Kanalverbindungsstück in Form eines Kompensators bekannt geworden. In Längs- oder Anbaurichtung umfasst der Kompensator dabei zwei in Längsoder Anbaurichtung beabstandete und quer zur Längsrichtung ausgerichtete umlaufende Flanschkonstruktionen, worüber der Kompensator mit einem nächsten Kanalstück fest verbunden werden kann. Die Flanschkonstruktion kann in Draufsicht rechteckförmig oder allgemein polygonal, aber auch in einer abgewandelten Ausführungsform kreisförmig oder oval gestaltet sein. Der Balg besteht dabei aus einer Kanalhaut, die aus einer Materialbahn in entsprechender Größe hergestellt und zu einem in Umfangsrichtung geschlossenen Schlauch dicht zusammengefügt ist. An der Kanalhaut ist dabei ferner noch sowohl eine Dichtlippe als auch ein Verankerungsabschnitt ausgebildet, um die Kanalhaut dadurch in geeigneter Weise in einer sickenförmigen Vertiefung der Flanschprofile zu verankern.

Ein mehrlagiger Kompensator mit abgestufter Lagendicke ist beispielsweise aus der DE 31 23 625 A bekanntgeworden. Es handelt sich hierbei um einen Kompensator, der zwischen zwei festen Anschlussstücken, mit dessen Hilfe er an Rohrleitungen befestigt werden kann, einen mehrlagigen Balg auf, der im Längsschnitt, also in Längsrichtung des Kompensators wellenförmige Wandabschnitte umfasst. Dieser Balg besteht aus einer wellenförmigen Außenlage und einer parallel dazu verlaufenden wellenförmigen Innenlage unter Ausbildung eines gleichbleibend dicken Abstandes, wobei der Abstand zwischen Innen- und Außenlage durch eine Vielzahl von Abstandshaltern mit definierter Spaltgröße festgelegt ist. Das Innen- und Außenwandsystem ist damit in fester Relation zueinander gehalten und erlaubt keine (ausgleichende) Verschiebung der Innenwand gegen die Außenwand, vor allem nicht in Achsrichtung des Kompensators, d.h. in dessen Längsrichtung.

Eine Balgkonstruktion für einen Kompensator ist grundsätzlich auch aus der DE 295 03 547 U bekannt geworden. Hier wird ein flexibles Hohlkammerprofil vorgeschlagen, welches symmetrisch zu einer Mittellängsebene ausgebildet ist, und zwar unter Ausbildung einer halbkreisförmigen Außenwand. Das Hohlkammerprofil umfasst dabei mehrere, voneinander getrennte Kammern, die durch Stege, die die beiden Wände verbinden, abgetrennt sind. Eine ausgleichende freie Verschiebung der Wände gegeneinander ist hier weder in Achsnoch in Querrichtung dazu gegeben.

In der Praxis hat sich jedoch gezeigt, dass beide vorstehend genannten Balgkonstruktionen bzw. -kompensatoren für viele Einsatzfälle Nachteile aufweisen. Als höchst nachteilig erweisen sich bei beiden vorbekannten Balken-Konstruktionen, dass diese beim Knicken an den Ecken eines quadratischen, rechteckigen oder mehreckigen Kompensators aber auch bei einem im Querschnitt runden oder teilweise runden Kompensators in den betreffenden Biegebereichen keine starken Vertiefungen bzw. Materialüberlappungen gebildet werden dürfen, da ansonsten die Handhabung beeinträchtigt ist. Es führt nämlich vor allem bei den bekannten Konstruktionen dazu, dass durch Knickung etc. quasi tote Winkel, Ecken oder Taschen gebildet werden, die im Einsatz von Luft nicht oder praktisch nicht mehr ausreichend durchströmt werden.

Obgleich sich diese Konstruktionen grundsätzlich bewährt haben, ist es Aufgabe der vorliegenden Erfindung, einen demgegenüber nochmals verbesserten Balg bzw. einen nochmals verbesserten Kompensator sowie ein entsprechendes Verfahren zur Herstellung eines derartigen Balges zu schaffen.

Die Aufgabe wird erfindungsgemäß bezüglich des Balges entsprechend Anspruchs 1 angegebenen Merkmale und bezüglich des Kompensators entsprechend Anspruch 17 und bezüglich eines Herstellverfahrens eines erfindungsgemäßen Balges entsprechend Anspruch 25 gelöst. Vorteilhafte Ausgestaltungen sind in den Unteransprüchen angegeben.

Der erfindungsgemäße Balg bzw. der erfindungsgemäße Kompensator weist gegenüber dem Stand der Technik nochmals deutliche Vorteile auf.

Erfindungsgemäß besteht nunmehr der Balg nicht nur aus einer flexiblen oder elastischen Kanalhaut, sondern ist als doppelwandiges Hohlkammersystem ausgebildet. Der erfindungsgemäße Balg kann dabei im weitesten Sinne bereits vor seiner Verwendung und vor seinem Einbau in einem Kompensator aufgrund seines Doppelwandsystems als schlauchförmig bezeichnet werden.

Der erfindungsgemäße Balg bzw. der erfindungsgemäße Kompensator weist dabei die überraschende und vorteilhafte Wirkung auf, dass der Balg durch seine schlauchförmige, doppelwandige Ausführung beim Knicken an den Ecken eines quadratisch, rechteckigen oder mehreckigen Kompensators aber auch bei einem im Querschnitt runden oder teilweise runden Kompensator in seinen Biegebereichen keine starken Vertiefungen bzw. keine Materialüberlappungen bildet. Dies führt bei Konstruktionen nach dem Stand der Technik dazu, dass quasi tote Winkel, Ecken und Taschen gebildet werden, die im Einsatz von Luft nicht oder praktisch nicht mehr durchströmt werden. Anstelle der bei herkömmlichen Konstruktionen nach dem Stand der Technik auftretenden starken Vertiefungen oder Überlappungen des Balgmaterials einschließlich der Herausbildung von abgeschirmten oder toten Zonen und Taschen wird demgegenüber bei dem erfindungsgemäßen Balg das innenseitig liegende Wandmaterial durch statische Stauchungen und das außenliegende Balgmaterial durch statische Dehnungen allenfalls so verformt, dass vergleichweise groß dimensionierte Verformungen erzeugt werden, die vergleichbar sanften Hügeln und Tälern großflächig gestaltet sind. Dadurch wird sicher vermieden, dass das Balgmaterial so verworfen werden kann, dass es vergleichsweise stark in den von Luft durchströmten Kanalinnenraum vorsteht, sich mit benachbartem Wandmaterial teilweise überlappt und abgeschirmte tote Ecken und Taschen bildet, die im Einsatzfall von der grundsätzlich durch das Kanalstück hindurchströmenden Luft nicht durchflutet werden.

Damit eignet sich das erfindungsgemäße Balgmaterial und die erfindungsgemäßen Kompensatoren insbesondere auch zum Einsatz in kritischen Bereichen, wie beispielsweise in Kliniken, in denen sicher vermieden werden soll, dass sich in derartigen beim Stand der Technik bildenden toten Ecken und Taschen Bakterien dauerhaft absetzen und einnisten können.

Das erfindungsgemäße Balgmaterial kann im Rahmen von weiteren Ausgestaltungen zusätzliche zahlreiche Vorteile aufweisen.

Als günstig erweist sich, wenn das Balgmaterial in seiner gesamten Breite, mit anderen Worten also im montierten Zustand in Längsrichtung des Kompensators doppelwandig ausgebildet ist und dabei bevorzugt keine inneren Stege aufweist. Dadurch wird der Innen- gegenüber der Außenwand eine maximale Freiheit der Verformungen gewährleistet, die die herbeiführenden oben genannten Ziele und Vorteile vorteilhaft unterstützt.

Ferner sind bevorzugt an dem schlauchförmigen Balgmaterial nicht nur entsprechende Dichtungslippen und -ansätze ausgebildet, die mit entsprechenden Dichtungslippen oder -ansätzen eines benachbarten Kanalteilstückes zusammenwirken (um eine möglichst dichte Verbindung der miteinander zu verbindenden Kanalstücke überhaupt zu gewährleisten), sondern bevorzugt sind an dem Balg auch noch Verankerungsansätze, beispielsweise Verankerungslippen vorgesehen. Diese können bevorzugt mit einer Widerhakenleiste oder - lippe versehen sein, worüber der so gebildete Balg in einer entsprechenden mit einer Hinterschneidung versehenen nutförmigen Vertiefung oder Sicke in den Flanschstücken problemlos ohne weitere Hilfsmittel oder Werkzeuge eingesetzt und so fest mit den Flanschstücken verbunden werden kann.

Das Balgmaterial kann aus allen geeigneten Materialien hergestellt werden, beispielsweise aus Polymermaterial, elastischem und/oder flexiblen Material, gummielastischen Material. EDPM-Material oder auch anderen Kunststoffsorten, wie beispielsweise Polyester, PVC etc. sind ebenfalls geeignet.

Das Balgmaterial kann dabei aus schwer entflammbarem, strahlenabsorbierendem, unbrennbarem, säurebeständigem, hitzeabstrahlendem und/oder temperaturbeständigem Material gefertigt sein.

Der Balg wird bevorzugt durch Extrusion hergestellt. Dabei kann der Balg auch im Extrusionsverfahren gleichzeitig mit einem Flanschstück hergestellt werden, so dass eine zusätzliche Verbindung des so gebildeten Balgs mit Flanschstücken nicht mehr notwendig ist. Sollte die Steifigkeit und Härte des mitextrudierten Flanschbereiches nicht ausreichend sein, so kann hier möglicherweise am Flanschschenkel noch ein der Versteifung dienendes Zusatzteil, beispielsweise ein Metall-Flanschstück oder ein Kunststoff-Flanschstück mit angebracht und verbunden werden.

In diesem Fall kann bevorzugt bei einem mit einem Balg mit extrudierten Flanschabschnitt entsprechend der Größe des zu dimensionierenden Kompensators in Abständen an der Längsseite des mitextrudierten Flansches in entsprechenden Abständen Querausnehmungen eingeschnitten oder ausgestanzt werden, um an diesen Stellen den Balg mit dem Flansch beispielsweise um 90° zueinander zu verschwenken. An den so gebildeten Eckbereichen können dann geeignete Eckstücke eingesetzt werden, beispielsweise aus Kunststoff oder aus Stahl vergleichbar den sonst verwendeten Eckstücken. Diese können beispielsweise entsprechend eingesteckt oder eingeklipst werden, insbesondere dann, wenn an den mitextrudierten Flanschstücken entsprechende Gegenausnehmungen, d.h. Rastervertiefungen oder Rastervorsprünge ausgebildet sind, die mit dem Eckstück die gewünschte feste Verbindung ermöglichen.

Sowohl im letztgenannten Fall wie aber auch bei der Ausbildung einer Verankerungslippe an dem Balg ist es ebenso möglich, unterschiedliche Materialien bei dem so einstückig ausgebildeten Balg zu verwendeten. Fertigungstechnisch kann es dabei vorgesehen sein, dass insbesondere im Bereich der Verankerungslippe oder - wenn der Balg gleichzeitig mit einem Flanschabschnitt ausgestattet wird - dieser Flanschabschnitt mit deutlich härterem Material hergestellt wird, als das restlich verbleibende Balgmaterial. Man spricht hier üblicherweise auch von einem sogenannten Koextrusionsverfahren, worüber es ermöglicht wird, ein Kunststoffteil über zwei Extruderdüsen mit unterschiedlicher Materialzusammensetzung und beispielsweise Härte herzustellen.

Insbesondere im eingebauten Zustand können weitere vorteilhafte Wirkungen dadurch erzielt werden, dass der Hohlraum mit geeigneten Materialien befüllt wird, beispielsweise Flächenmaterialien, wie Gewebeeinlagen, Drahtgeflechte, Gummimatten, Kunststoffgitter etc. oder beispielsweise aus sonstigen reißfesten Materialien ausgefüllt oder gefüllt wird.

Allgemein kann das Hohlkammersystem des Balges mit versteifenden, wärmeisolierenden und/oder schalldämmenden Stoffen befüllt werden oder auch mit Stoffen, die die Stabilität und/oder die Belastbarkeit des Balges insgesamt erhöhen und verbessern.

Ebenso ist es möglich, die Hohlkammer, d.h. das Doppelwandsystem des Balges mit granulatförmigen Materialien zu befüllen, wie beispielsweise Styroporkügelchen, Quarzmaterialien, Metallstaub oder ähnliche Stoffe.

Schließlich können der Reißsicherheit und der Festigkeit dienenden Stoffe nicht nur in das Hohlkammersystem zusätzlich eingelegt, sondern beispielsweise auch in das Balgmaterial Armierungsstoffe beim Extrusions- oder allgemeinem Herstellungsvorgang miteingearbeitet sein und werden.

Zur Erhöhung der Reißfestigkeit, d.h. insbesondere bezüglich der in Längsrichtung eines so gebildeten Kompensators möglicherweise einwirkenden Zugbeanspruchung kann vorgesehen sein, dass beispielsweise in dem Balg, bevorzugt im Hohlkammersystem eine Gewebeeinlage oder eine sonstige Armierungseinlage mit eingelegt wird, die bevorzugt nicht dehnbar ist, mit der Folge, dass nach montiertem Zustand der Rand der Armierungseinlage an den gegenüberliegenden Endabschnitten des doppelwandigen Balgsystems mit eingeklemmt wird, so dass die Zugkräfte über die Armierungseinlage aufgenommen und abgestützt sind.

Schließlich kann der Balg aber auch durch Einbringen von bevorzugt in Längsrichtung des Kompensators (also quer zur Extrusionsrichtung) verlaufenden Lamellen beim Extrudieren versehen werden, um dadurch das Balgmaterial und damit den Kompensator in dessen Längsrichtung noch stabiler zu gestalten, da hierdurch eine Dehnungsbegrenzung erzielt wird. Anstelle der Lamellen können auch Stahl- oder Federstahl-Elemente entsprechend der Richtung miteingearbeitet oder in sonstiger Weise mit dem Balgmaterial verbunden werden, um diese Dehnungsbegrenzung zu erzielen.

Die Erfindung wird nachfolgend anhand von Ausführungsbeispielen erläutert. Dabei zeigen im einzelnen:
- Figur 1 :: eine schematische perspektivische Darstellung eines im Querschnitt rechteckförmigen Kompensators;
- Figur 2 :: eine schematische perspektivische Darstellung eines im Querschnitt kreisförmigen Kompensators;
- Figur 3 :: eine schematische stirnseitige Ansicht auf einen Ausschnitt einer an sich umlaufenden Flanschverbindungs-Konstruktion zur Verbindung eines Kompensators mit einem nächsten Kanalstück in demontiertem Zustand;
- Figur 4 :: eine Queransicht längs der Pfeilrichtung IV in Figur 3;
- Figur 5 :: eine Querschnittsdarstellung durch ein Flanschprofil entsprechend der Linie V-V in Figur 1, Figur 2 und Figur 3 mit einem ersten, schematischen Ausführungsbeispiel eines erfindungsgemäßen Balges;
- Figur 6 :: ein zu Figur 5 abgewandeltes Auführungsbeispiel eines erfindungsgemäßen Balges;
- Figur 7 :: ein abgewandeltes Ausführungsbeispiel in auszugsweise schematischer Querschnittsdarstellung quer zur Extrusionsrichtung durch einen mit einem mitextrudierten Flanschansatz versehenen Balg;
- Figur 8 :: eine auszugsweise Draufsicht entsprechend der Teildarstellung VIII in Figur 7;
- Figur 9 :: eine entsprechende Querschnittsdarstellung vergleichbar dem Ausführungsbeispiel nach Figur 7, bei welchem der mitextrudierte Flanschabschnitt jedoch in einer Winkelausrichtung von etwa 90° zum mittleren Balgabschnitt geformt ist;
- Figur 10 :: eine Draufsicht auf die Figur 8 entsprechend der Pfeildarstellung IX in Figur 8; und
- Figur 11 :: ein zu Figur 9 abgewandeltes Ausführungsbeispiel, bei welchem eine Kunststoff-Ecke zur Herstellung eines Kompensators mit dem Balg mit extrudiertem Flanschansatz eingeklipst ist.

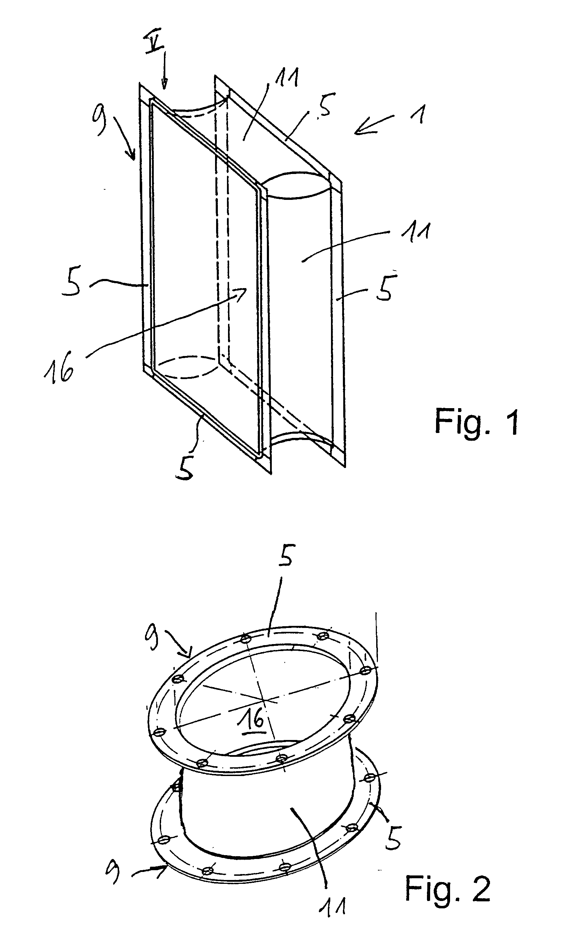

In Figur 1 ist in schematischer perspektivischer Darstellung ein Elastischer-Verbindungs-Stutzen gezeigt, der nachfolgend auch als Kompensator bezeichnet wird und in der Praxis insbesondere zur Körperschaltentkopplung und als Dehnungsausgleich in Belüftungskanälen für Klimaanlagen Verwendung findet.

Der in Figur 1 gezeigte Kompensator 1 weist dabei einen polygonalen Querschnitt d.h. einen rechteckförmigen Querschnitt auf. Der in Figur 2 gezeigte Kompensator ist dagegen zylinderförmig gestaltet und weist also einen kreisförmigen Querschnitt auf. Die Porfilquerschnitte der stirnseitig jeweils in Anbaurichtung vorgesehenen Flanschprofile 5 können jedoch gleich gestaltet sein, worauf nachfolgend eingegangen wird.

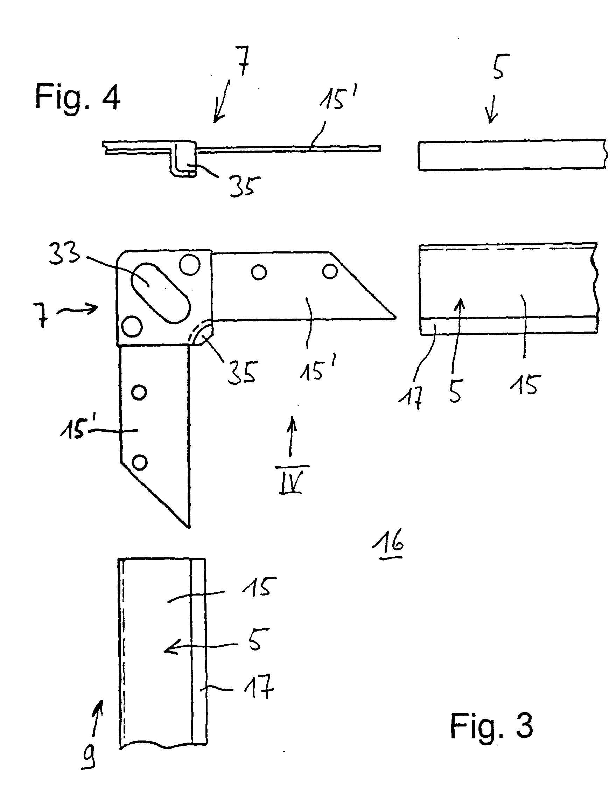

Die rechteckförmige Flanschverbindung für den in Figur 1 gezeigten Kompensator ist auszugsweise in auseinandergezogener Darstellung in Figuren 3 und 4 wiedergegeben. Daraus ist ersichtlich, dass vier Flanschprofile 5 den rechteckförmigen Rahmen zusammengelegt und über Eckwinkel 7 zu einem einstückigen Flanschrahmen 9 zusammengefügt werden können, an welchem dann der bereits in Figuren 1 und 2 von außen sichtbare Balg 11 befestigt wird.

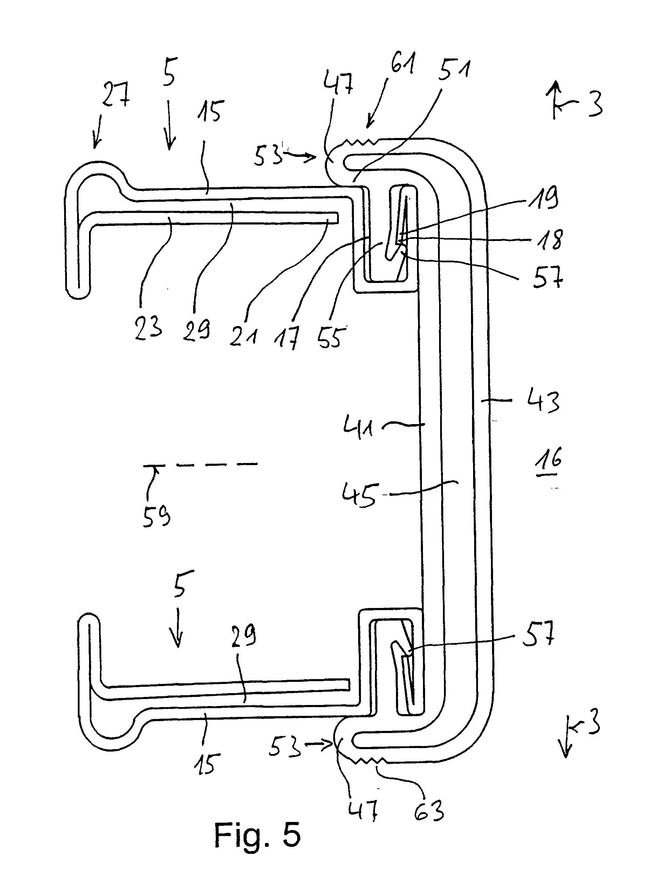

Das in den Figuren 3 und 4 in Draufsicht und in einer 90° dazu verdreht liegenden Seitenansicht und in Figur 5 in einer Querschnittsdarstellung wiedergegebene Flanschprofil 5 (wobei in der Schnittdarstellung gemäß Figur 5 sowohl ein oberes wie ein gegenüberliegendes unteres Flanschprofil 5 im Querschnitt wiedergegeben ist, wie es mit einer nachfolgend noch erörterten Ausführungsform eines Balges verbunden ist) weist einen zentralen Montageschenkel 15 auf, der im montierten Zustand quer zur Längs- oder Anbaurichtung 3 des Kompensators ausgerichtet liegt, also parallel zum unmittelbar benachbarten nächsten Flanschprofil 5 eines Flanscharmes 9 eines nachfolgenden Kanalstückes.

Kanalinnenseitig, also dem Kanalinnenraum 16 zugewandt liegend, geht der Montageschenkel 15 in eine U-förmige Nut 17 über, die nicht zwingend rechteckförmig gestaltet sein muss, sondern beispielsweise auch eine eher kreisförmige nach Art einer Sicke gestaltete Hinterschneidung aufweisen kann, wie dies grundsätzlich aus der DE 41 40 870 A1 bekannt ist.

Das innenliegende Materialende 18 des Flanschmaterials ist im Querschnitt gemäß Figur 5 Widerhacken-ähnlich in Richtung Nut 17 hineinragend umgekantet und bildet somit eine Widerhacken ähnliche Halteleiste 19, auf deren Funktion nachfolgend näher eingegangen wird.

Die zum Materialende 18 gegenüberliegende äußere Begrenzungskante 21 des Flanschprofiles 5 ist zur Erzielung einer höheren Steiflichkeit unter Ausbildung einer sich quer zum Montageschenkel 15 erstreckenden und über diese überstehende Versteifungsabwinkelung 27 zweimal konvex und einmal konkav gekantet, und geht dann in einen Parallelschenkel 23 über, der im geringen Abstand benachbart und parallel oder zumindest ansatzweise parallel zum Montageschenkel 15 verläuft. Die Begrenzungskante 21 endet dann kurz vor der im Querschnitt U-förmigen Nut 17.

In den so gebildeten geringfügigen Abstandsspalt 29 zwischen dem Montage- und dem Parallelschenkel 15, 23 kann dann jeweils ein Steckschenkel 15' des Montageschenkels 15 eingesteckt werden, wobei eine sichere feste Verbindung dadurch gebildet wird, dass in uneingestecktem Zustand der Abstands spalt 29 kleiner ist als die Materialdicke des Streckschenkels 15'.

Im unmittelbaren Eckbereich des Montageschenkels 15 können dann beispielsweise langlochförmige Ausnehmungen 33 eingebracht sein, worüber zwei stirnseitig aneinander bringbare Flanschrahmen 9 zweier Kanalstücke, beispielsweise eines Kanalstücks und eines in Figur 1 gezeigten Kompensators fest miteinander verbunden werden können.

Wie aus der Darstellung gemäß Figuren 3 und 4 auch hervorgeht, ist unmittelbar innenseitig in der Ecke des Montageschenkels 15 in unmittelbarer Verlängerung der nutoder sickenförmigen Vertiefung 17 eine in Draufsicht halbkreisförmig verlaufende Sicke 35 eingebracht.

Das vorstehend erläuterte Flanschprofil 5 weist bei einem kreisförmigen Komparator gemäß Figur 2 den gleichen wie in Figur 5 wiedergegebenen Querschnitt auf, entspricht also bezüglich des Querschnittes einem nicht gekrümmt verlaufenden Flanschprofil 5, wie es zur Bildung eines im Querschnitt rechteckförmigen Komparators entsprechend Figur 1 verwendet wird.

Nachfolgend wird auf die Balgkonstruktion eingegangen.

In Figur 5 ist dabei ferner ein erstes Ausführungsbeispiel für einen erfindungsgemäßen Balg gezeigt, der in Querschnittsdarstellung doppelwannig ausgebildet ist und eine Außenwand 41 und eine kanalinnenseitig liegende Innenwand 43 umfasst. Dadurch wird zwischen der Außen- und der Innenwand 41, 43 ein Hohlraum 45 gebildet, der sich praktisch über die gesamte Breite des Balges 11 erstreckt, d.h. über die gesamte axiale Länge des in Figur 1 oder 2 gezeigten Kompensators, wobei Pfeil 3 die Anbaurichtung wiedergibt, die der axialen Längsrichtung des Kanalstückes entspricht.

Dieser Balg kann beispielsweise als Endlosbalg im Extrusionsverfahren in beliebiger Länge senkrecht zur Zeichenebene verlaufend hergestellt werden.

Am oberen und unteren Rand des Balges ist dieser gemäß dem Ausführungsbeispiel nach Figur gegenüber seinem mittleren doppelwannigen Abschnitt um etwa 90° von der Kanalinnenseite weg verlaufend abgewinkelt, wobei die äußere und innere Wand 41, 43 an ihrem Ende jeweils über einen Bogenabschnitt 47 miteinander verbunden sind.

Unmittelbar benachbart zum Bogenabschnitt 47 ist auf den aufeinander zu weisenden Seiten 51 der beiden Endabschnitte 53 jeweils eine Verankerungslippe 55 mit einem in Richtung der Außenwand 41 vorstehende Hackenlippe 57 ausgebildet, die symmetrisch zu einer Mittellängsebene 59 angeordnet sind.

Auf der gegenüberliegenden Seite zu den Hackenlippen 57 ist an den Endabschnitten 53 jeweils ein Dichtansatz 61 ausgebildet, der im gezeigten Ausführungsbeispiel aus mehreren nebeneinander angeordneten und in Längsrichtung verlaufenden Längsrippen 63 besteht.

Zur Montage muss ein so gebildeter Balg mit der Dichtlippe 65 nur in die oben erwähnte U-förmige Nut 17 eingesetzt werden, bis die Hakenlippe 57 das Wiederhaken-ähnliche Halteelement 19 in der U-förmigen Nut 17 hintergreift, so dass nach Einfügen dieser Dichtlippe des Balges in die entsprechend umlaufende Nut 19 eines Flanschrahmens 9 dieser Balg unverlierbar fest am Flanschprofil 5 befestigt ist. Um einen in Umfangsrichtung geschlossenen Balg herzustellen, muss dieser nur in der entsprechend richtigen Länge bezogen auf die Größe des Kompensators abgelängt, d.h. abgeschnitten und dann umlaufend in der U-förmigen Nut 17 eingesetzt werden.

An den benachbart zueinander liegenden Schnittstellen kann der Balg dann miteinader verklebt, verschweißt oder sonst irgendwie in geeigneter Weise abgedichtet werden.

Aus dem erläuterten Ausführungsbeispiel geht hervor, dass das Balgmaterial, d.h. das Doppelwand-System unter Ausbildung eines Hohlraums zwischen der Außen- und Innenwand für sich genommen bereits schlauchförmig gestaltet ist, und der Balg in dieser Längsrichtung beispielsweise durch Extrusion hergestellt werden kann. Im Einsatz, d.h. im eingebauten Zustand zur Herstellung eines Kompensators liegen dann die Seitenkanten des Balges, d.h. seine Quererstreckung in axialer Längsrichtung des Kompensators, da der Balg nach Ablängung in entsprechender Länge in Umfangsrichtung unter Bildung eines Kanalinnenraumes zu einer geschlossenen doppelwandigen Hülle geformt wird, und seine dann aneinanderliegenden Schnittkanten durch geeignete Weise dicht verschlossen werden.

Da bei einem rechteckförmigen Komparator gemäß Figuren 1, 3 und 4 auch eine entsprechende Sicke 35 innenliegend am Montageschenkel 15 ausgebildet ist, kann dort die Dichtlippe 55 von der einen U-förmigen Nut 17 in einem Flanschprofil 5 zu der entsprechenden Nut in einem nächsten um 90° versetzt liegenden Flanschprofil fortlaufen.

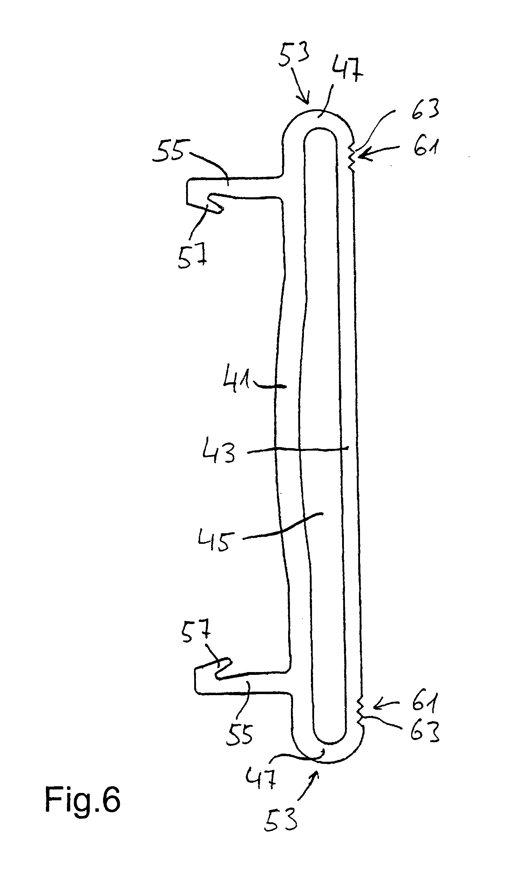

Nachfolgend wird ein leicht abgeändertes Ausführungsbeispiel anhand von Figur 6 erläutert, das sich von jenem nach Figur 5 vor allem dadurch unterscheidet, dass der doppelwannige Balg nicht von Haus aus mit etwa 90° abgewinkelten Endabschnitten 53 versehen ist.

Der im Querschnitt in Figur 6 gezeigte Faltenbalg läuft im wesentlichen ohne Abwinklung an seinen Endabschnitten 53 in Verlängerung der Außen- bzw. Innenwand 41, 43 aus, wobei benachbart zu dem am Ende liegenden Bogenabschnitt 47 gegenüberliegend der Dichtansatz 61 bzw. die Verankerungslippe 55 der Hackenlippe 57 ausgebildet ist.

Anhand dieses Ausführungsbeispiels ist auch gezeigt, dass beispielsweise die beiden Wände auch unterschiedlich dick gestaltet sein können. Im gezeigten Ausführungsbeispiel ist die Innenwand 43 geringfügig dünner als die Außenwand 41. Zudem ist die Außenwand 41 nach außen hin leicht konvex, d.h. bauchig von Haus aus vorgeformt.

Montage und Einbau erfolgt bei diesem Ausführungsbeispiel derart, dass zunächst die eine Hakenleiste 57 an einer Endseite des so gebildeten Balges in die Verankerungs-Nut 17 eines Flanschprofils 5 eingesetzt und dann der schlauchförmige Balg nach unten umgebogen und seine gegenüberliegende Verankerungs- und Hakenlippe 57 in die an dem stirnseitig versetzt liegenden Flanschrahmen 9 der dort ausgebildeten Nuten 17 eingesetzt wird. Nach erfolgter Montage ergibt sich dann eine Gestaltung mit umgelegten, d.h. umgebogenen Endabschnitten 53 vergleichbar der Balgkonstruktion nach Figur 5.

Da der Balg aus geeignetem Material hergestellt ist, beispielsweise aus Kunststoff, aus EDPM, aus Gummi oder gummiähnlichen Stoffen, aus polymeren Stoffen, aus flexiblen oder zumindest leicht elastischen Materialien, ist sichergestellt, dass das Material nicht knicken kann und flächig auf anderen Abschnitten des Balgmaterials zu liegen kommt, wenn es in einen entsprechenden Kompensator eingebaut wird. Das Material kann auch bei rechteckförmigen Kompensatoren nur Verformungen nach Art von sanften Buckeln und Vertiefungen, vergleichbar Hügeln und Tälern, annehmen, so dass keine hinterschnittenen oder abgeschirmten Taschen gebildet werden können. Die Verformungen weisen also keine Knickstellen auf, sondern sind eher durch Biegeradien gekennzeichnet, die vergleichsweise groß dimensioniert sind, zumindest verglichen mit sonstigen Kunststofffolien oder gewebeartigen Kanalhautmaterialien. Sich an der Innenwand ausbildende Verformungen weisen üblicherweise Biegeradien auf, die nicht oder im Durchschnitt nicht kleiner sind als 5mm, in der Regel sogar größer sind als 8mm, 10mm, 12mm oder sogar 15mm.

Das Material, das zumindest im Innenwandbereich eine Shorehärte von ca. 150 bis 170 auf, wobei zumindest die Verankerungslippe und dabei insbesondere die Hakenlippe 57 aus härterem Material, beispielsweise mit einer Shorehärte von über D65, d.h. von D65 bis D90 hergestellt sein kann.

Das entsprechende Material kann eine Dicke von mehr als 1mm, beispielsweise um 2mm oder sogar noch dicker ausgebildet sein, und dabei vergleichsweise weich und leicht verformbar elastisch gestaltet sein. Insbesondere durch die gebogenen Endabschnitte 53 hat das schlauchförmige Balgmaterial die Tendenz zu einem weichen Kurvenverlauf an der Innenwand unter Vermeidung der Ausbildung von Hinterschneidungen und von einer Luftströmung und nicht durchfluteten Taschen.

Das erläuterte Balgmaterial kann je nach Bedarf mit zusätzlichen der Verstärkung dienenden Gewebeammierungen oder durch Einbringung von Fasern in das Material etc. versehen sein. Es kann einstückig ausgebildet sein, oder es kann aus Teilen bestehen, die durch Nähen, Schweißen, Nieten oder durch sonstige Elemente zusammengesetzt sein können. Es kann in der Hohlkammer eine weitere flächige Armierung eingebracht sein, die der Aufnahme von Zugbelastungen in axialer Längsrichtung und damit in Querrichtung zur Extrusionsrichtung des Balgmateriales dient, und dazu beispielsweise aus einer Gewebebahn besteht. Diese Gewebebahn sollte bevorzugt bis in die Endabschnitte 53 im Hohlraum 45 reichen. Da beim Zusammenbau eines so gebildeten Kompensators mit einem nächsten Kanalstück auch eine so inneneingelegte flächige Einlage, beispielsweise Gewebeeinlage mit eingeklemmt wird, kann diese, wenn sie kürzer bemessen ist als die Innen- oder Außenwand 43, 41 die Zugkräfte aufnehmen, ohne dass diese von dem Balgmaterial aufgenommen werden muß.

Schließlich können auch bereits beim Herstellungsvorgang quer zu der Längsrichtung des Balges, d.h. von einem Endabschnitt 53 zum gegenüberliegenden Endabschnitt 53 verlaufend Rippen oder Lamellen eingebracht sein, die als Dehnungsbegrenzer in Längsrichtung des Kompensators dienen.

Ansonsten kann das Material je nach Einsatzzweck und Anforderung aus schwer entflammbaren, strahlenabsorbierendem, unbrennbarem, säurebeständigem, hitzeabstrahlendem und/oder temperaturbeständigem Material gefertigt sein.

Darüber hinaus kann der erwähnte Hohlraum 45 des schlauchförmigen Balgmaterials je nach Bedarf mit geeigneten Flächenmaterialien, beispielsweise Gewebeeinlagen, Drahtgeflechten, Gummimatten, Kunststoffgittern etc. gefüllt oder ausgefüllt werden, die insbesondere der höheren Belastbarkeit des Balges dienen. Genauso können aber auch andere reißfeste Materialien eingesetzt und verwendet werden.

Darüber hinaus kann der Hohlraum 43 aber auch mit anderem geeigneten amorphem Material gefüllt werden, beispielsweise granulatförmigem Material, Styropor, Quarz oder ähnlichen Stoffen.

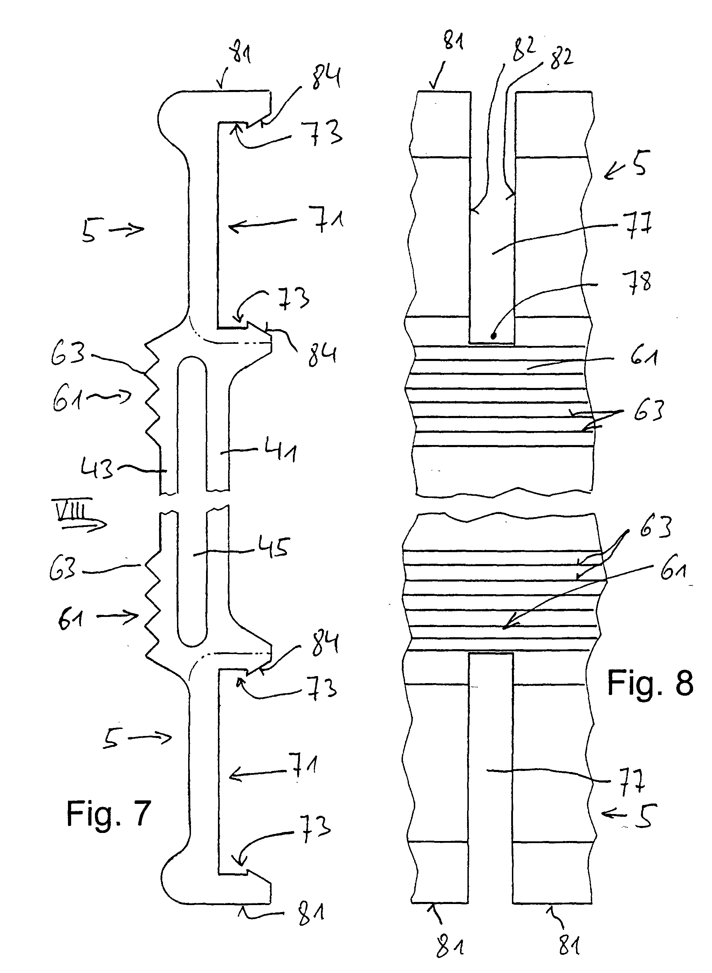

Anhand von Figur 7 ist eine Abwandlung gezeigt, bei welcher Flanschprofile 5 mit dem Balgmaterial mitextrudiert sind. Die Konturgebung des seitlichen Flanschansatzes ist zumindest ähnlich wie bei Verwendung der anhand von Figuren 1 bis 6 erläuterten Flanschprofile.

An den mitextrudierten Flanschprofilen 5 in dem Ausführungsbeispiel nach Figur 7 sind rückwärtig eine entsprechende nach hinten offene Ausnehmung 71 mit gegenüberliegenden Hinterschneidungen 73 vorgesehen, die letztlich zum Einsetzen der Steckschenkel 15' dienen.

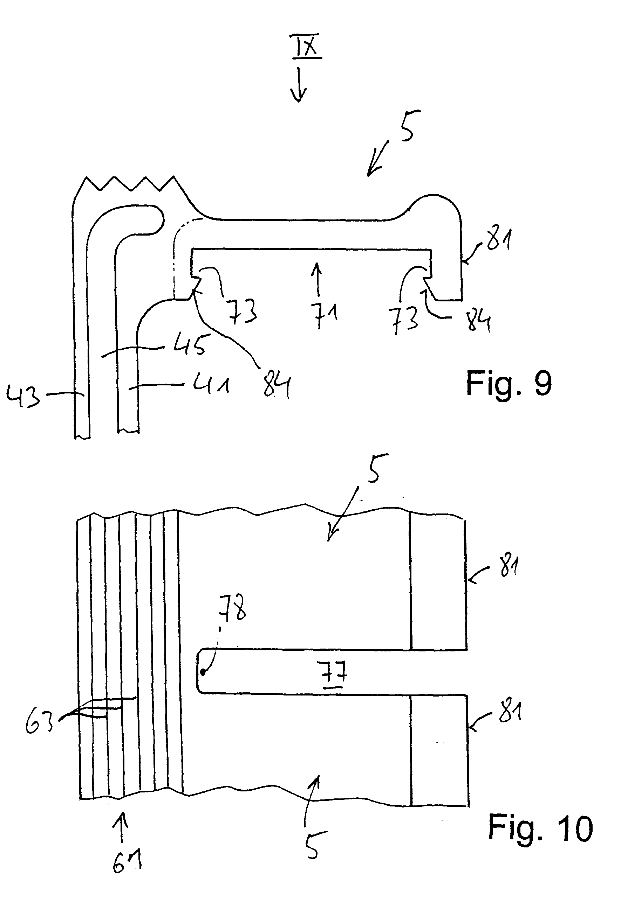

Bei Herstellung eines im Querschnitt rechteckförmigen Kompensators aus einem Balgmaterial und einem mitextrudierten Flanschprofil werden entsprechend der Höhe und Breite des Kompensators in das Balgmaterial von der Flanschseite 75 entsprechend der Draufsicht nach Figur 8 von den Längskanten 81 ausgehend, und zwar im rechten Winkel dazu verlaufend, in das Flanschmaterial seitliche Schlitze oder Einschnitte 77 eingebracht (z.B. durch Stanzen), die bis kurz an den Dichtansatz 61 reichen. Die so getrennten Flanschabschnitte können dann um eine in Figur 8 senkrecht zur Zeichenebene stehende Schwenkachse 78 am innenliegenden Ende des Einschnittes voneinander weg verschwenkt werden, bis die in Figur 8 parallelen Schnittkanten 82 der so gegliederten Flanschabschnitte in einem rechten Winkel zueinander liegen. Werden die so gebildeten Flanschabschnitte dann noch um 90° zu dem mittleren doppelwandigen Schlauchabschnitt nach hinten verschwenkt, so nehmen sie dann eine in Figur 9 wiedergegebene Lage ein, in der dann in die so gebildeten Hinterschneidungen oder Ausnehmungen 71 die entsprechenden Steckschenkel 15' eines Eckwinkels eingesteckt werden können. Weisen die Steckschenkel 15' eine Form entsprechend der vorstehend erläuterten Ausnehmung 71 mit entsprechender Hinterschneidung 73 auf, so können die Steckschenkel hier eingesteckt werden, so dass insgesamt ein stabiler Flanschrahmen 9 erzeugt wird. Dabei kann der Steckschenkel auch entsprechend der keilförmigen Auflauffläche 84 angrenzend zu den Hinterschneidungen 73 von hinten her direkt eingeklipst werden, bis die Hinterschneidungen 73 den betreffenden Steckschenkel 15' eines Eckstücks übergreifen und dadurch eine feste Verbindung mit dem Eckwinkel erzeugen.

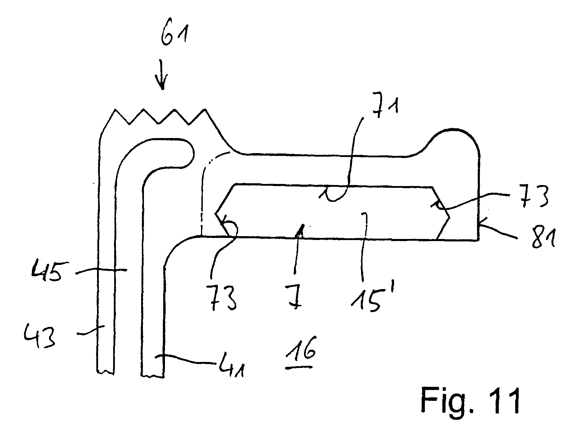

Anhand von Figur 10 und 11 ist einmal im Querschnitt und einmal in Draufsicht vergleichbar der Darstellung nach Figur 8 und 9 ein geringfügig abgewandeltes Ausführungsbeispiel gezeigt, das sich von Figur 8 und 9 nur dadurch unterscheidet, dass der Flanschansatz zusammen mit dem Endabschnitt des Balges vergleichbar der im Ausführungsbeispiel nach Figur 5 bereits beim Extrudiervorgang an einer etwa 90°-Ausrichtung zu dem mittleren doppelwandigen Balgabschnitt hergestellt wird. Die weitere Verarbeitung unter Herstellung eines Kompensators erfolgt dann wie anhand von Figur 8 und 9 vom Prinzip her erläutert ist.

Alternativ und ergänzt kann auch entsprechend der Querschnittsdarstellung nach Figur 11 ein Eckwinkel 7 mit Steckschenkeln 15' eingesteckt werden, der aus Kunststoff gebildet ist. In diesem Ausführungsbeispiel ist die Ausnehmung 71 ebenfalls mit Hinterschneidungen 73 versehen, nämlich im Querschnitt V-förmig gebildete Hinterschneidungen, so dass hier durch bloßen Druck von hinten her die Steckschenkel in die so gebildete mit Hinterschneidung 73 versehene Ausnehmung 71 eingesteckt werden können. Auch dadurch kann problemlos und leicht ein rechteckförmiger Flanschrahmen und damit letztlich ein rechteckförmiger Kompensator hergestellt werden.

## Patentansprüche

1. Balg für einen Kompensator (1) als elastische Verbindung zwischen zwei in Längsrichtung voneinander angeordneten Kanalanschlussstücken oder Flanschrahmen (9), insbesondere für Belüftungskanäle einer Klimaanlage, welches zwischen einer Außen- und einer Innenwand (41, 43) eine Hohlraumanordnung umfasst, **gekennzeichnet durch** die folgenden Merkmale,
- die Hohlraumanordnung zwischen der Außen- und der Innenwand (41, 43) ist als Ein-Kammer-Hohlraum ausgebildet,
- der Ein-Kammer-Hohlraum ist zwischen der Außen- und der Innenwand (41, 43) verbindungs-stegfrei gebildet, und
- der Ein-Kammer-Hohlraum zwischen der Außen- und der Innenwand (41, 43) erstreckt sich
a) über die Gesamtbreite des Balges, d.h. die Länge des Balges (11) in Längs- oder Anbaurichtung (3), und/oder
b) in dem Bereich zwischen am Balg (11) vorgesehenen Verankerungslippen (55) und/oder
c) in dem Bereich zwischen am Balg (11) vorgesehenen Flanschabschnitten (5), und
- das Material des Balges (11) ist flexibel und/oder zumindest leicht elastisch.

2. Balg nach Anspruch 1, **dadurch gekennzeichnet, dass** das schlauchförmige doppelwandige Balgmaterial im Extrusionsverfahren hergestellt ist.

3. Balg nach Anspruch 1 oder 2, **dadurch gekennzeichnet, dass** die Außenwand (41) und die Innenwand (43) unterschiedliche Materialdicke aufweisen, vorzugsweise die Außenwand (41) dicker gestaltet ist.

4. Balg nach einem der Ansprüche 1 bis 3, **dadurch gekennzeichnet, dass** die Außen- und die Innenwand (41, 43) zwischen ihren gegenüberliegenden Endabschnitten (53) unterschiedlich lang gestaltet sind, vorzugsweise die Außenwand (43) nach außen hin im Querschnitt leicht konvex ausgeformt ist.

5. Balg nach einem der Ansprüche 1 bis 4, **dadurch gekennzeichnet, dass** an den gegenüberliegenden, in Anbaurichtung (3) weisenden die Außen- mit der Innenwand (41, 43) verbindenden Endabschnitte (53), im Querschnitt zumindest annähernd wulstartig oder halbkreisförmig gestaltet sind.

6. Balg nach einem der Ansprüche 1 bis 5, **dadurch gekennzeichnet, dass** das Balgmaterial mit seinem Außen- und Innenabschnitt so gestaltet ist, dass der Hohlraum (45) im unbelasteten Zustand eine Dicke und damit der Abstand zwischen Außen- und Innenwand (41, 43) zwischen 1 mm und 2 cm, vorzugsweise 2 mm und 10 mm, insbesondere um 5 mm variiert.

7. Balg nach einem der Ansprüche 1 bis 6, **dadurch gekennzeichnet, dass** unmittelbar benachbart zu seinen die Außenund die Innenwand (41, 43) miteinander verbindenden Endabschnitten (53), die in Längs- oder Anbaurichtung versetzt zueinander liegen, eine Verankerungslippe (55) ausgebildet ist.

8. Balg nach Anspruch 7, **dadurch gekennzeichnet, dass** an der Verankerungslippe (55) eine Hakenlippe (57) ausgebildet ist.

9. Balg nach Anspruch 7 oder 8, **dadurch gekennzeichnet, dass** benachbart zum Endabschnitt (53) gegenüberliegend zur Verankerungslippe (55) ein Dichtansatz (61) ausgebildet ist.

10. Balg nach einem der Ansprüche 1 bis 9, **dadurch gekennzeichnet, dass** im Balgmaterial zwischen den beiden Endabschnitten (53) verlaufend und in Querrichtung zueinander beabstandet Längsrillen oder Lamellen zur Erhöhung der Zugfestigkeit ausgebildet sind.

11. Balg nach einem der Ansprüche 1 bis 10, **dadurch gekennzeichnet, dass** das Balgmaterial die Festigkeit erhöhende Armierungen umfasst.

12. Balg nach einem der Ansprüche 1 bis 11, **dadurch gekennzeichnet, dass** die Verankerungslippe (55) und dabei insbesondere die Hakenlippe (57) aus härterem Material als das restliche Material des Balges, insbesondere des Materials im Bereich der Außen- und Innenwand (41, 43) ausgebildet ist.

13. Balg nach einem der Ansprüche 1 bis 12, **dadurch gekennzeichnet, dass** dieser aus Kunststoff, aus polymerem Material, aus Gummi oder gummiähnlichem Material, aus EDPM besteht oder solche Materialien umfasst.

14. Balg nach einem der Ansprüche 1 bis 13, **dadurch gekennzeichnet, dass** das Material des Balgs (11) aus schwer entflammbarem, strahlenabsorbierendem, unbrennbarem, säurebeständigem, hitzeabstrahlendem, temperaturbeständigem, wärmeisolierendem und/oder schalldämmendem Material besteht.

15. Balg nach einem der Ansprüche 1 bis 14, **dadurch gekennzeichnet, dass** der Balg an seinen gegenüberliegenden Seiten jeweils mit einem mithergestellten, vorzugsweise mitextrudierten Flanschprofil versehen ist.

16. Balg nach Anspruch 15, **dadurch gekennzeichnet, dass** die mitextrudierten Flanschansätze aus härterem Material als das verbleibende Balgmaterial hergestellt sind.

17. Kompensator als elastisches Verbindungselement zwischen zwei im Längsabstand zueinander angeordneten Kanalanschlussstücken, mit einem Balg nach zumindest einem der Ansprüche 1 bis 16, wobei der Ein-Kammer-Hohlraum zwischen der Außen- und der Innenwand (41, 43) sich am Kompensator ausgebildeten Flanschabschnitten (5) erstreckt.

18. Kompensator nach Anspruch 17, **dadurch gekennzeichnet, dass** der Hohlraum (45) des Balgs mit einem flächigen Material, insbesondere einem reißfestem Material befüllt ist.

19. Kompensator nach Anspruch 18, **dadurch gekennzeichnet, dass** das flächige Material aus einer Gewerbeeinlage, einem Drahtgeflecht, einer Gummimatte und/oder einem Kunststoffgitter oder ähnlichem besteht.

20. Kompensator nach Anspruch 18 oder 19, **dadurch gekennzeichnet, dass** das flächige Material zwischen den Endabschnitten (53) des Balgs (11) spätestens nach Verbindung mit einem nächsten Kanalstück eingeklemmt gehalten ist und dass die Breite und damit Länge des eingesetzten Flächenmaterials in Längs- und Anbaurichtung (3) kürzer ist als die wirksame Länge der Außen- oder Innenwand (41, 43) des Balgs (11).

21. Kompensator nach einem der Ansprüche 17 bis 20, **dadurch gekennzeichnet, dass** der Hohlraum (45) mit geeignetem amorphem Material befüllt ist, beispielsweise Styroporkügelchen, Quarzen, Granulat, Metallstaub oder ähnlichem.

22. Kompensator nach einem der Ansprüche 17 bis 21, **dadurch gekennzeichnet, dass** der Balg (11) mit an seinen gegenüberliegenden Längsseiten mit extrudierten Flanschprofilen (5) besteht, die entsprechend der Höhe und/oder Breite eines im Querschnitt polygonalen Kompensators durch Einbringung von seitlichen, quer zur Längsrichtung des Balges verlaufenden Einschnitten (77) hergestellt und die so gegliederten Flanschprofilabschnitte voneinander weg verschwenkt und durch Einsetzen von Eckwinkeln (7) zu einem geschlossenen Profilrahmen (9) verbunden sind.

23. Kompensator nach Anspruch 22, **dadurch gekennzeichnet, dass** die mitextrudierten Flanschprofile (5) an einer Seite, vorzugsweise der rückwärtigen Seite mit einer Ausnehmung (71) versehen sind, in welche Steck- oder Schnappschenkel (15') eines Eckwinkels (7) einsetzbar sind.

24. Kompensator nach Anspruch 22 oder 23, **dadurch gekennzeichnet, dass** der einsetzbare Eckwinkel (7) aus Metall, Stahl oder Kunststoff besteht.

25. Verfahren zur Herstellung eines Balges für einen Kompensator (1) als elastische Verbindung zwischen zwei in Längsrichtung voneinander angeordnete Kanalanschlussstücke oder Flanschrahmen (9), insbesondere für Belüftungskanäle einer Klimaanlage, welches zwischen einer Außen- und einer Innenwand (41, 43) eine Hohlraumanordnung umfasst, wobei der Balg folgende Merkmale aufweist
- die Hohlraumanordnung zwischen der Außen- und der Innenwand (41, 43) ist als Ein-Kammer-Hohlraum ausgebildet,
- der Ein-Kammer-Hohlraum ist zwischen der Außen- und der Innenwand (41, 43) verbindungs-stegfrei gebildet, und
- der Ein-Kammer-Hohlraum zwischen der Außen- und der Innenwand (41, 43) erstreckt sich
a) über die Gesamtbreite des Balges, d.h. die Länge des Balges (11) in Längs- oder Anbaurichtung (3), und/oder
b) in dem Bereich zwischen am Balg (11) vorgesehenen Verankerungslippen (55) und/oder
c) in dem Bereich zwischen am Balg (11) vorgesehenen Flanschabschnitten (5), und
- das Material des Balges (11) ist flexibel und/oder zumindest leicht elastisch,
nach einem der Ansprüche 1 bis 19, **dadurch gekennzeichnet, dass** der Balg im Extrusionsverfahren hergestellt wird.

26. Verfahren nach Anspruch 25, **dadurch gekennzeichnet, dass** der schlauchförmige Balg mit an seinen gegenüberliegenden Längsseiten ausgebildeten Flanschabschnitten (5) extrudiert wird, dass an den Längskanten (81) der gegenüberliegenden Flanschprofilabschnitte (5) in geeigneten Abständen ein nur bis maximal zum Dichtansatz (61) reichende Abschnitte oder Schlitze ausgeschnitten oder ausgestanzt werden, die senkrecht zur Längskante (81) verlaufen und dass die so gegliederten Flanschprofilabschnitte relativ zueinander unter Bildung eines umlaufenden Flanschrahmens (9) gebogen werden, wobei in den Eckbereichen ein entsprechender Eckwinkel (7) bevorzugt von hinten her durch Eindrücken seiner Montageschenkel (15') in die Ausnehmungen (71) einschnappend eingedrückt werden.

## Claims

1. Bellows for a compensator (1) as an elastic connection between two duct connection pieces or flange frames (9) arranged at a distance from each other in the longitudinal direction, in particular for ventilation ducts of an air-conditioning system, which bellows contains a cavity arrangement between an outer wall and an inner wall (41, 43), **characterized by** the following features,
- the cavity arrangement between the outer wall and the inner wall (41, 43) is designed as a single-chamber cavity,
- the single-chamber cavity between the outer wall and the inner wall (41, 43) is formed in a manner such that it is free from connecting webs, and
- the single-chamber cavity between the outer wall and the inner wall (41, 43) extends
a) over the entire width of the bellows, i.e. over the length of the bellows (11) in the longitudinal direction or direction of attachment (3), and/or
b) in the region between securing lips (55) provided on the bellows (11), and/or
c) in the region between flange sections (5) which are provided on the bellows (11), and
- the material of the bellows (11) is flexible and/or at least slightly elastic.

2. Bellows according to Claim 1, **characterized in that** the tubular, double-walled bellows material is produced by extrusion.

3. Bellows according to Claim 1 or 2, **characterized in that** the outer wall (41) and the inner wall (43) differ in material thickness, the outer wall (41) preferably being thicker.

4. Bellows according to one of Claims 1 to 3, **characterized in that** the outer wall and the inner wall (41, 43) differ in length between their opposite end sections (53), the outer wall (43) preferably being slightly convex in shape outwardly in cross section.

5. Bellows according to one of Claims 1 to 4, **characterized in that** the opposite end sections (53) which point in the attachment direction (3) and connect the outer wall to the inner wall (41, 43) are at least approximately bead-like or semicircular in cross section.

6. Bellows according to one of Claims 1 to 5, **characterized in that** the bellows material, with its outer section and inner section, is designed in such a manner that in the unstressed state the thickness of the cavity (45), and therefore the distance between the outer wall and inner wall (41, 43) varies between 1 mm and 2 cm, preferably 2 mm and 10 mm, in particular by 5 mm.

7. Bellows according to one of Claims 1 to 6, **characterized in that** a securing lip (55) is formed directly adjacent to the end sections (53) of said bellows, which end sections connect the outer wall and the inner wall (41, 43) to each other and are offset with respect to each other in the longitudinal direction or direction of attachment.

8. Bellows according to Claim 7, **characterized in that** a hook lip (57) is formed on the securing lip (55).

9. Bellows according to Claim 7 or 8, **characterized in that** a sealing projection (61) is formed adjacent to the end section (53) and lying opposite the securing lip (55).

10. Bellows according to one of Claims 1 to 9, **characterized in that** longitudinal grooves or fins running between the two end sections (53) and spaced apart from one another in the transverse direction are formed in the bellows material for the purpose of increasing the tensile strength.

11. Bellows according to one of Claims 1 to 10, **characterized in that** the bellows material contains reinforcements which increase the strength.

12. Bellows according to one of Claims 1 to 11, **characterized in that** the securing lip (55), and in the process in particular the hook lip (57), is formed from harder material than the rest of the material of the bellows, in particular the material in the region of the outer wall and inner wall (41, 43).

13. Bellows according to one of Claims 1 to 12, **characterized in that** the latter consists of plastic, of polymeric material, of rubber or rubber-like material, of EDPM, or contains materials of this type.

14. Bellows according to one of Claims 1 to 13, **characterized in that** the material of the bellows (11) consists of flame-resistant, ray-absorbing, noncombustible, acid-proof, heat-deflecting, thermally stable, heat-insulating and/or sound-absorbing material.

15. Bellows according to one of Claims 1 to 14, **characterized in that** on each of its opposite sides the bellows is provided with a flange profile which is produced, preferably extruded, with it.

16. Bellows according to Claim 15, **characterized in that** the flange projections extruded with it are produced from harder material than the remaining bellows material.

17. Compensator as an elastic connecting element between two duct connection pieces which are arranged at longitudinal distance from each other, having a bellows according to at least one of Claims 1 to 16, the single-chamber cavity between the outer wall and the inner wall (41, 43) extending in the region between flange sections (5) formed on the compensator.

18. Compensator according to Claim 17, **characterized in that** the cavity (45) of the bellows is filled with a sheet-like material, in particular a tear-resistant material.

19. Compensator according to Claim 18, **characterized in that** the sheet-like material consists of a woven insert, a wire mesh, a rubber mat and/or a plastic lattice or the like.

20. Compensator according to Claim 18 or 19, **characterized in that** the sheet-like material is wedged between the end sections (53) of the bellows (11) at the latest after connection to a next duct piece, and **in that** the width and therefore length of the inserted sheet-like material is shorter in the longitudinal direction and direction of attachment (3) than the effective length of the outer wall or inner wall (41, 43) of the bellows (11).

21. Compensator according to one of Claims 17 to 20, **characterized in that** the cavity (45) is filled with a suitable amorphous material, for example styropor beads, quartz, granulated material, metallic powder or the like.

22. Compensator according to one of Claims 17 to 21, **characterized in that** the bellows (11) comprises, on its opposite longitudinal sides, extruded flange profiles (5) which are produced in accordance with the height and/or width of a cross sectionally polygonal compensator by making lateral incisions (77) which run transversely with respect to the longitudinal direction of the bellows, and the thus articulated flange-profile sections are pivoted away from one another and, by the insertion of corner brackets (7), are connected to form a closed profile frame (9).

23. Compensator according to Claim 22, **characterized in that** the flange profiles (5) which are extruded with it are provided on one side, preferably on the rear side, with a recess (71) into which plug-in or snap-in legs (15') of a corner bracket (7) can be inserted.

24. Compensator according to Claim 22 or 23, **characterized in that** the insertable corner bracket (7) consists of metal, steel or plastic.

25. Process for producing a bellows for a compensator (1) as an elastic connection between two duct connection pieces or flange frames (9) arranged to a distance from each other in the longitudinal direction, in particular for ventilation ducts of an air-conditioning system, which bellows contains a cavity arrangement between an outer wall and an inner wall (41, 43), the bellows having the following features,
- the cavity arrangement between the outer wall and the inner wall (41, 43) is designed as a single-chamber cavity,
- the single-chamber cavity between the outer wall and the inner wall (41, 43) is formed in a manner such that it is free from connecting webs, and
- the single-chamber cavity between the outer wall and the inner wall (41, 43) extends
a) over the entire width of the bellows, i.e. over the length of the bellows (11) in the longitudinal direction or direction of attachment (3), and/or
b) in the region between securing lips (55) provided on the bellows (11), and/or
c) in the region between flange sections (5) which are provided on the bellows (11), and
- the material of the bellows (11) is flexible and/or at least slightly elastic, according to one of Claims 1 to 19, **characterized in that** the bellows is produced by extrusion.

26. Process according to Claim 25, **characterized in that** the tubular bellows is extruded with flange sections (5) formed on its opposite longitudinal sides, **in that** on the longitudinal edges (81) of the opposite flange-profile sections (5) there are cutout or punched out at suitable distances sections or slots which reach only as far as the sealing projection (61) at maximum and run perpendicular with respect to the longitudinal edge (81), and **in that** the thus articulated flange-profile sections are bent relative to one another forming an encircling flange frame (9), in which case a corresponding corner bracket (7) is pressed, preferably from behind, in the corner regions in a snap-in manner by its installation legs (15') being pressed into the recesses (71).

## Revendications

1. Soufflet pour un compensateur (1) servant de liaison élastique entre deux pièces de raccordement de canal ou cadres à brides (9) agencés l'un par rapport à l'autre en direction longitudinale, en particulier pour des canaux d'aération d'un système de climatisation, lequel soufflet comprend un agencement de cavité entre une paroi extérieure et une paroi intérieure (41, 43), **caractérisé par** les caractéristiques suivantes :
- l'agencement de cavité entre la paroi extérieure et la paroi intérieure (41, 43) est réalisé sous forme de cavité à chambre unique,
- la cavité à chambre unique entre la paroi extérieure et la paroi intérieure (41, 43) est formée sans traverse de liaison, et
- la cavité à chambre unique entre la paroi extérieure et la paroi intérieure (41, 43) s'étend
a) sur toute la largeur du soufflet, c'est-à-dire la longueur du soufflet (11) en direction longitudinale ou de montage (3), et/ou
b) dans la région entre des lèvres d'ancrage (55) prévues sur le soufflet (11), et/ou
c) dans la région entre des tronçons de brides (5) prévus sur le soufflet (11), et
- le matériau du soufflet (11) est flexible et/ou au moins légèrement élastique.

2. Soufflet selon la revendication 1, **caractérisé en ce que** le matériau du soufflet en forme de tuyau et à double paroi est réalisé par procédé d'extrusion.

3. Soufflet selon l'une ou l'autre des revendications 1 et 2, **caractérisé en ce que** la paroi extérieure (41) et la paroi intérieure (43) présentent des épaisseurs de matériau différentes, la paroi extérieure (41) étant de préférence réalisée plus épaisse.

4. Soufflet selon l'une des revendications 1 à 3, **caractérisé en ce que** la paroi extérieure et la paroi intérieure (41, 43) sont réalisées avec une longueur différente entre leurs tronçons d'extrémité opposés, la paroi extérieure (43) étant de préférence façonnée légèrement convexe en section transversale vers l'extérieur.

5. Soufflet selon l'une des revendications 1 à 4, **caractérisé en ce que** les tronçons d'extrémité (53) opposés, orientés en direction de montage (3) et reliant la paroi extérieure à la paroi intérieure (41, 43) sont réalisés en section transversale au moins approximativement en forme de bourrelets ou de demi-cercles.

6. Soufflet selon l'une des revendications 1 à 5, **caractérisé en ce que** le matériau du soufflet est réalisé de telle sorte avec son tronçon extérieur et son tronçon intérieur qu'à l'état non sollicité, la cavité (45) présente une épaisseur, et par conséquent la distance entre la paroi extérieure et la paroi intérieure (41, 43) varie entre 1 mm et 2 cm, de préférence entre 2 mm et 10 mm, en particulier de 5 mm.

7. Soufflet selon l'une des revendications 1 à 6, **caractérisé en ce qu'**une lèvre d'ancrage (55) est réalisée directement au voisinage de ses tronçons d'extrémité (53) reliant l'une à l'autre la paroi extérieure et la paroi intérieure (41, 43), qui sont situés en décalage l'un par rapport à l'autre en direction longitudinale ou de montage.

8. Soufflet selon la revendication 7, **caractérisé en ce qu'**une lèvre en forme de crochet (57) est formée sur la lèvre d'ancrage (55).

9. Soufflet selon l'une ou l'autre des revendications 7 et 8, **caractérisé en ce qu'**un talon d'étanchéité est réalisé au voisinage du tronçon d'extrémité (53) à l'opposé de la lèvre d'ancrage (55).

10. Soufflet selon l'une des revendications 1 à 9, **caractérisé en ce que** dans le matériau du soufflet sont réalisées des rainures longitudinales ou des lamelles s'étendant entre les tronçons d'extrémité (53) et à distance les unes des autres en direction transversale, pour augmenter la résistance à la traction.

11. Soufflet selon l'une des revendications 1 à 10, **caractérisé en ce que** le matériau du soufflet comprend des armatures augmentant la solidité.

12. Soufflet selon l'une des revendications 1 à 11, **caractérisé en ce que** la lèvre d'ancrage (55) et ici en particulier la lèvre en forme de crochet (57) est réalisée en un matériau plus dur que le reste du matériau du soufflet, en particulier du matériau dans la région de la paroi extérieure et de la paroi intérieure (41, 43).

13. Soufflet selon l'une des revendications 1 à 12, **caractérisé en ce que** celui-ci est constitué en matière plastique, en matériau polymère, en caoutchouc ou en matériau similaire au caoutchouc, en EPDM ou comprend de tels matériaux.

14. Soufflet selon l'une des revendications 1 à 13, **caractérisé en ce que** le matériau du soufflet (11) est constitué d'un matériau difficilement inflammable, absorbant le rayonnement, incombustible, résistant aux acides, dissipant la chaleur, résistant à la chaleur, calorifuge et/ou insonorisant.

15. Soufflet selon l'une des revendications 1 à 14, **caractérisé en ce que** sur ses côtés opposés, le soufflet est pourvu d'une bride profilée respective réalisée d'un seul tenant, de préférence extrudée d'un seul tenant.

16. Soufflet selon la revendication 11, **caractérisé en ce que** les talons de brides extrudés d'un seul tenant sont réalisés en un matériau plus dur que le reste du matériau du soufflet.

17. Compensateur servant d'élément de liaison élastique entre deux pièces de raccordement de canal agencées à distance longitudinale l'une par rapport à l'autre, comportant un soufflet selon au moins l'une des revendications 1 à 16, la cavité à chambre unique entre la paroi extérieure et la paroi intérieure (41, 43) s'étendant dans la région entre des tronçons de bride (5) réalisés sur le compensateur.

18. Compensateur selon la revendication 17, **caractérisé en ce que** la cavité (45) du soufflet est remplie avec un matériau en nappe, en particulier un matériau résistant à la déchirure.

19. Compensateur selon la revendication 18, **caractérisé en ce que** le matériau en nappe est constitué d'un insert en tissu, d'un treillis en fil métallique, d'un tapis de caoutchouc et/ou d'une grille en matière plastique ou similaire.

20. Compensateur selon l'une ou l'autre des revendications 18 et 19, **caractérisé en ce que** le matériau en nappe est maintenu serré entre les tronçons d'extrémité (53) du soufflet (11) au plus tard après une liaison avec une pièce de canal suivante et **en ce que** la largeur et ainsi la longueur du matériau en nappe inséré est plus court en direction longitudinale et de montage (3) que la longueur active de la paroi extérieure ou de la paroi intérieure (41, 43) du soufflet (11).

21. Compensateur selon l'une des revendications 17 à 20, **caractérisé en ce que** la cavité (45) est remplie d'un matériau amorphe approprié, par exemple de billes de polystyrène expansé, de quartz, de granulés, de poussière métallique ou similaire.

22. Compensateur selon l'une des revendications 17 à 21, **caractérisé en ce que** sur ses côtés longitudinaux opposés, le soufflet (11) est pourvu de brides profilées (5) extrudées qui, selon la hauteur et/ou la largeur d'un compensateur polygonal en section transversale, sont réalisées en ménageant des entailles (77) latérales s'étendant transversalement à la direction longitudinale du soufflet, les tronçons de brides profilés ainsi articulés sont pivotés en éloignement les uns des autres et reliés en insérant des cornières d'angles (7) pour former un cadre profilé (9) fermé.

23. Compensateur selon la revendication 22, **caractérisé en ce que** les brides profilées (5) extrudées d'un seul tenant sont pourvues sur un côté, de préférence sur le côté postérieur, d'un évidement (71) dans lequel on peut insérer des branches d'enfichage ou d'encliquetage (15') d'une cornière d'angle (7).

24. Compensateur selon l'une ou l'autre des revendications 22 et 23, **caractérisé en ce que** la cornière d'angle (7) insérable est constituée en métal, en acier ou en matière plastique.

25. Procédé de fabrication d'un soufflet pour un compensateur (1) servant de liaison élastique entre deux pièces de raccordement de canal ou cadres à brides (9) agencés l'un par rapport à l'autre en direction longitudinale, en particulier pour des canaux d'aération d'un système de climatisation, lequel soufflet comprend un agencement de cavité entre une paroi extérieure et une paroi intérieure (41, 43), le soufflet présentant les caractéristiques suivantes :
- l'agencement de cavité entre la paroi extérieure et la paroi intérieure (41, 43) est réalisé sous forme de cavité à chambre unique,
- la cavité à chambre unique entre la paroi extérieure et la paroi intérieure (41, 43) est formée sans traverse de liaison, et
- la cavité à chambre unique entre la paroi extérieure et la paroi intérieure (41, 43) s'étend
a) sur toute la largeur du soufflet, c'est-à-dire la longueur du soufflet (11) en direction longitudinale ou de montage (3), et/ou
b) dans la région entre des lèvres d'ancrage (55) prévues sur le soufflet (11), et/ou
c) dans la région entre des tronçons de brides (5) prévus sur le soufflet (11), et
- le matériau du soufflet (11) est flexible et/ou au moins légèrement élastique,
selon l'une des revendications 1 à 19, **caractérisé en ce que** le soufflet est réalisé par procédé d'extrusion.

26. Procédé selon la revendication 25, **caractérisé en ce que** le soufflet en forme de tuyau est extrudé avec des tronçons de brides (5) réalisés sur ses côtés longitudinaux opposés, **en ce que** sur les arêtes longitudinales (81) des tronçons de brides profilées (5) opposés, on découpe ou on estampe à des distances appropriées des tronçons ou fentes allant au maximum jusqu'au talon d'étanchéité (61), qui s'étendent perpendiculairement à l'arête longitudinale (81) et **en ce que** les tronçons de brides profilées ainsi articulés sont pliés les uns par rapport aux autres en formant un cadre à brides (9) périphérique, et dans les régions des coins, une cornière d'angle (7) correspondante est enfoncée de préférence depuis l'arrière en s'encliquetant dans les évidements (71) par enfoncement de ses branches de montage (15').
